Europäisches Patentamt

European Patent Office

Office européen des brevets

(11) Numéro de publication: **0 208 587**
**A1**

## (12) DEMANDE DE BREVET EUROPEEN

(21) Numéro de dépôt: 86401351.1

(22) Date de dépôt: 20.06.86

(51) Int. Cl.⁴: **G02B 6/44** , **H02G 1/06** ,
**H02G 1/08**

(30) Priorité: 03.07.85 FR 8510143

(43) Date de publication de la demande:
14.01.87 Bulletin 87/03

(84) Etats contractants désignés:
**DE GB IT NL**

(71) Demandeur: **SAT Société Anonyme de
Télécommunications**
**41, rue Cantagrel**
**F-75631 Paris Cedex 13(FR)**
Demandeur: **SOCIETE INDUSTRIELLE DE
LIAISONS ELECTRIQUES (SILEC)**
**64 bis, rue de Monceau**
**F-75008 Paris(FR)**

(72) Inventeur: **Calevo, Robert**
**41, rue Cantagrel**
**F-75631 Paris Cedex 13(FR)**

(74) Mandataire: **Cerez-Busnel, Béatrice**
**Société Anonyme de Télécommunications**
**41, rue Cantagrel**
**F-75631 Paris Cedex 13(FR)**

(54) **Procédé d'insertion de fibres optiques dans des conduits tubulaires et le dispositif de mise en oeuvre.**

(57) La présente méthode concerne la technique de répartition et de protection de fibres optiques, par exemple aux extrêmités de câbles à fibres optiques, lorsque ces fibres sont extraites de joncs rainurés.

La méthode consiste essentiellement à disposer un moyen (21) de préhension guidant la fibre optique (3) au centre du conduit (1) tubulaire et un moyen d'entraînement (2) de ladite fibre dans le conduit (21).

Application à tout type de conduit tubulaire, plastique, métallique, ou autre.

Fig.2.

**Procédé d'insertion de fibres optiques dans des conduits tubulaires et le dispositif de mise en oeuvre**

La présente invention concerne la technique de répartition et de protection de fibres optiques aux extrêmités des câbles à fibres optiques et en particulier lorsque ces fibres sont extraites de joncsrainurés.

Les câbles à fibres optiques formés de joncs rainurés sont bien connus. Dans chaque rainure est placée au moins une fibre optique sans autre protection que son revêtement primaire. Les rainures sont réparties hélicoïdalement autour du jonc et remplies d'un produit protégeant les fibres de l'humidité tel que des graisses. Aux extrêmités de câbles, les fibres sont extraites des joncs rainurés sur des longueurs pouvant atteindre plusieurs mètres. Il est alors nécessaire de séparer, guider, identifier ces fibres pour les raccorder aux équipements d'extrêmités appropriés. Il est donc également utile de protéger ces fibres, par exemple au moyen de tubes souples, comme décrit dans la demande de brevet français 2 534 700 de la société SILEC et de la demanderesse. Ces tubes sont par exemple en matière synthétique, telle que du nylon, du polyéthylène, du PVC, ou tout autre.

Toutefois, il est extrêmement difficile d'enfiler les fibres dans ces conduits de faible section, d'une part, du fait de la fragilité des fibres, d'autre part, du fait de la graisse dont les fibres ont été enduites dans le câble.

Dans l'art antérieur, comme décrit dans le brevet US 4 092 769, une source d'air comprimé permet une dilatation du conduit tubulaire afin d'éviter à la fibre ou au faisceau de fibre un contact avec les parois du conduit.

Une telle méthode est peut-être efficace mais très lourde à mettre en oeuvre.

L'invention se propose d'insérer les fibres, en sortie du jonc, dans les conduits tubulaires, sans aucune difficulté.

Le procédé de l'invention consiste essentiellement à introduire dans le conduit tubulaire (1) des moyens de préhension (21) d'une fibre optique (3) au moins, lesdits moyens de préhension (21) étant solidaires d'un moyen d'entraînement (2), lesdits moyens de préhension (21) guidant la fibre (3) au centre du conduit tubulaire (1) pendant qu'on exerce une traction sur ledit moyen d'entraînement (2), ledit moyen d'entraînement (2) présentant des caractéristiques mécaniques de résistance à la rupture inférieures à celles de la fibre optique (3).

Le dispositif de mise en oeuvre du procédé de l'invention est formé essentiellement d'un fil (2), par exemple métallique, terminé par un enroulement (21) de section parallèle à celle du conduit - (1) et de diamètre sensiblement inférieur à celui du conduit (1), ledit enroulement (21) guidant et enserrant la fibre (3) au centre du conduit (1) dans lequel il est enserré.

Selon une réalisation préférée de l'invention, le fil (2) est un fil de cuivre présentant une résistance à la rupture inférieure à 500 g.

L'invention s'applique au repérage des fibres, par exemple au moyen de gaines colorées ou repérables, au guidage de fibres, par exemple dans un jonc rainuré, ou à tout type de guidage d'une fibre optique.

D'autres avantages et caractéristiques apparaîtront à la lecture de la description suivante illustrée par des dessins.

La figure 1 représente schématiquement le conduit tubulaire de l'invention.

La figure 2 représente une fibre optique entraînée dans le conduit tubulaire de la figure 1.

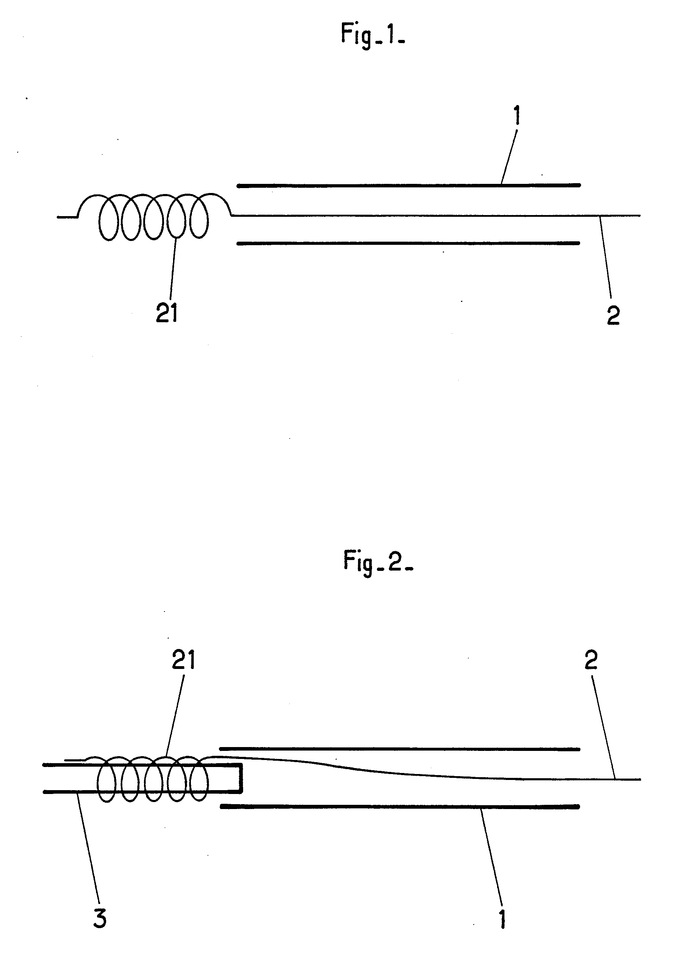

En se référant à la figure 1, le conduit tubulaire (1) de l'invention est un tube souple comme ceux de l'art antérieur (cf. brevet FR 2 534 700) mais pourvu en son centre d'un fil (2) métallique de faible section tel qu'un fil de cuivre dont l'une des extrêmités est terminée par un bobinage (21) de section parallèle à celle du tube (1) et de diamètre sensiblement inférieur à celui du tube (1). Ce fil - (2) peut encore être réalisé en tout autre matériau. Il est simplement nécessaire qu'il présente une certaine résistance à la traction inférieure à celle de la fibre optique (3). En effet, le procédé de l'invention consiste à amener l'extrêmité libre de fibre optique (3) au centre de l'enroulement (21), comme représenté sur la figure 2, et à tirer sur l'autre extrêmité de fil (2) métallique. La traction applique l'enroulement (21) contre la fibre (3) en l'enfermant et assure sa parfaite pénétration dans le conduit (1) sans aucune dégradation.

On choisit avantageusement selon l'invention un fil (2) présentant une résistance à la rupture inférieure à 500 g. En effet, la plupart des fibres - (3) résistent sans dommage à de telles tensions et il est nécessaire que le fil (2) casse avant la création de défauts dans la fibre (3).

Lorsque le conduit (1) est parfaitement posé autour de la fibre (3), il suffit de dégager l'extrêmité de fibre (3) de l'enroulement (21).

Un tel procédé d'insertion de fibres optiques dans un conduit tubulaire est extrêmement aisé à mettre en oeuvre. Il est possible même d'extruder les conduits (1) directement autour des fils (2) métalliques ou encore d'introduire les fils (2) par tout autre procédé bien connu des câbliers. Le moyen de préhension (21) est dimensionné de telle sorte que sa section soit sensiblement inférieure à celle du conduit tubulaire (1). Ainsi, l'enroulement - (21) guide et pro tège la fibre (3) de tous frottements ou contraintes contre les parois du conduit - (1).

L'invention est également compatible avec un repérage des fibres, par exemple par coloration des conduits tubulaires (1).

L'invention a été décrite dans le cas de câbles à joncs rainurés remplis de graisse, mais elle s'appliquerait de la même façon au guidage de fibres issues de câbles plats ou tout autre type de câble.

L'invention s'applique à l'insertion dans tout type de conduit tubulaire, plastique, métallique ou autre.

**Revendications**

1. Procédé d'insertion d'au moins une fibre optique dans un conduit tubulaire, procédé caractérisé par le fait qu'on introduit dans ledit conduit tubulaire (1) des moyens de préhension (21) d'une fibre optique (3) au moins, lesdits moyens de préhension (21) étant solidaires d'un moyen d'entraînement (2), lesdits moyens de préhension (21) guidant la fibre (3) au centre du conduit tubulaire - (1) pendant qu'on exerce une traction sur ledit moyen d'entraînement (2), ledit moyen d'entraînement (2) présentant des caractéristiques mécaniques de résistance à la rupture inférieures à celles de la fibre optique (3).

2. Dispositif de mise en oeuvre du procédé selon la revendication 1 caractérisé par le fait que le moyen d'entraînement (2) est un fil métallique terminé par un enroulement (21) de section parallèle à celle du conduit (1) et de diamètre sensiblement inférieur à celui du conduit (1), ledit enroulement (21) guidant et enserrant la fibre (3) au centre du conduit (1) dans lequel il est inséré.

3. Dispositif selon la revendication 2 caractérisé par le fait que le fil métallique (2) est un fil de cuivre.

Fig.1.

1

21

2

Fig.2.

21

2

3

1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | CH-A- 580 344 (GUSTAV BORUTTA)<br>* Colonne 2, lignes 9-18; figure 3 * | 1-3 | G 02 B    6/44<br>H 02 G    1/08 |
| | --- | | |
| Y | US-A-4 092 769 (T.D. DICKSON)<br>*    Colonne    1,    lignes 19-24,38-45,52-54;   colonne   2, lignes 13-20; figures 1,5 * | 1-3 | |
| | --- | | |
| A | US-A-4 337 923 (J.A. SMITH)<br>* Colonne 1, lignes 27-42; figure 3 * | 1-3 | |
| | --- | | |
| A | US-A-2 602 207 (D.L. KELLEMS)<br>* En entier * | 1 | |
| | ----- | | |

DOMAINES TECHNIQUES
RECHERCHES (Int. Cl.4)

G 02 B    6/44
H 02 G    1/06
H 02 G    1/08

Le présent rapport de recherche a été établi pour toutes les revendications

| Lieu de la recherche | Date d'achèvement de la recherche | Examinateur |
|---|---|---|
| LA HAYE | 15-10-1986 | WESBY P.B. |